Europäisches Patentamt

European Patent Office

Office européen des brevets

(19)

(11) Veröffentlichungsnummer: **0 290 758 B1**

(12) **EUROPÄISCHE PATENTSCHRIFT**

(45) Veröffentlichungstag der Patentschrift:
04.07.90

(21) Anmeldenummer: 88104578.5

(22) Anmeldetag: 22.03.88

(51) Int. Cl.⁵: **F16H 53/02,** F01L 1/04,
B21D 53/84, B23P 11/00

(54) Hohlwelle.

(30) Priorität: 12.05.87 DE 3715813
22.06.87 DE 3720597

(43) Veröffentlichungstag der Anmeldung:
17.11.88 Patentblatt 88/46

(45) Bekanntmachung des Hinweises auf die Patenterteilung:
04.07.90 Patentblatt 90/27

(84) Benannte Vertragsstaaten:
AT BE CH DE ES FR GB IT LI NL SE

(56) Entgegenhaltungen:
DE-A- 3 401 057
GB-A- 1 115 093

(73) Patentinhaber: GESENKSCHMIEDE SCHNEIDER GMBH,
Ulmer Strasse 112, D-7080 Aalen(DE)

(72) Erfinder: Ebbinghaus, Alfred, Dipl.-Ing.,
Schellingstrasse 78, D-7080 Aalen(DE)

(74) Vertreter: Neidl-Stippler, Cornelia, Dr., Rauchstrasse 2,
D-8000 München 80(DE)

## Beschreibung

Die Erfindung betrifft wie im Oberbegriffe von Anspruch 1 angegeben eine Hohlwelle mit Drehmoment übertragenden Konstruktionselementen, wie Zahnrädern, Kurven, Nocken od. dgl., von denen wenigstens ein Konstruktionselement eine unrunde Öffnung zum Aufsetzen auf das Rohr aufweist, aus einem Ausgangsrohr mit im wesentlichen gleicher Wandstärke und mit jeweils wenigstens einem Stützkörper zwischen dem Rohr und jedem Konstruktionselement mit unrunder Öffnung, wobei das Ausgangsrohr zur kraft- und formschlüssigen Verbindung mit den Konstruktionselementen durch Innendruck derart aufgeweitet ist, daß das Rohr bei einem Teilbereich seines Umfangs an der Innenwand der Konstruktionselemente und mindestens bei einem anderen Teilbereich seines Umfangs an der Außenwand der Stützkörper anliegt.

Mehrstückige Hohlwellen, die auch als gebaute Hohlwelle bezeichnet werden und im Wege des Fügens aus einem Rohr und Konstruktionselementen, wie Nocken od. dgl. hergestellt sind, sind bekannt.

Aus der DE–A 3 401 057 ist eine gattungsgemäße Hohlwelle bekannt geworden, wobei ein einstückig mit einem Konstruktionselement mit unrunder Öffnung ausgebildeter Stützkörper vorgesehen ist. Bei dieser Hohlwelle müssen kompliziert geformte Konstruktionselemente mit unterschiedlichen Wandstärken eingesetzt werden, die aufwendig und kostenintensiv in der Herstellung sind.

Aus der GB–A 1 115 093 ist eine Nockenwelle bekannt geworden, bei der Nocken mittels eines Klebmittels, wie beispielsweise Araldit, auf einem Rohr befestigt werden, wobei diese Nocken mittels eines Stiftes, der durch eine Bohrung im Rohr greift, gegen Drehung um die Rohrlängsachse gesichert sind. Es handelt sich hierbei also um ein Verfahren, bei dem die Rohrwand zumindest partiell durch Einbringung einer Bohrung geschwächt ist.

Es ist demgegenüber Aufgabe der Erfindung, eine Hohlwelle zu schaffen, die mit einfacher herzustellenden Konstruktionselementen herzustellen ist.

Die Aufgabe wird erfindungsgemäß dadurch gelöst, daß jeder Stützkörper als separates Bauteil ausgebildet ist.

Dadurch, daß nunmehr die Konstruktionselemente ohne angeformte Stützkörper nicht durch aufwendige Herstellungsverfahren, wie es bei dem Nocken nach der DE–A 3 401 057 der Fall war, hergestellt werden müssen, sondern in einfacher Weise bspw. durch Abtrennen von einem durch ein preiswertes Umformverfahren zur gewünschten Querschnittsform umgeformtes Rohr mit gleichmäßiger Wandstärke erhalten werden können, kann die Herstellung der Hohlwelle erleichtert und dadurch auch in wirtschaftlicherer Weise erfolgen, wie es besonders bei Hohlwellen, die im Kraftfahrzeugbau in hohen Stückzahlen eingesetzt werden, erforderlich ist.

Die Konstruktionselemente mit unrunder Öffnung können bei einer bevorzugten Ausführungsform eine gleichmäßige Wandstärke aufweisen.

Die Wandstärke des Rohrs kann bei einer bevorzugten Ausführungsorm der Erfindung unter den Konstruktionselementen mindestens partiell vergrößert sein. Ein Verfahren zur Herstellung dieser Ausführungsform ist in der älteren EP-A 278 292, veröffentlicht am 17.08.88, beschrieben, wobei das Aufweiten des Rohrs durch Innendruck unter gleichzeitiger Materialnachführung in Richtung der Rohrachse unter Herstellung einer Wandverstärkung unterhalb der Konstruktionselemente bewirkt wird.

Die Hohlwelle kann auch durch partielle Verkleinerung der unrunden Öffnung des Konstruktionselementes, wie bspw. durch Aufschrumpfen oder durch partielle Vergrößerung des Rohraußendurchmessers, wie es auch nach Einbringung von unterkühlten Innenteilen in die Öffnungen der Konstruktionselemente und anschließende Aufweitung der Innenteile erfolgen.

Ein bevorzugtes Verfahren zur Herstellung derartiger Hohlwellen weist also das Einlegen der Hohlwellenkomponeneten in eine Form unter Einbringung von Ausgangsrohr und mindestens einem Stützkörper in die jeweilige Öffnung eines Konstruktionselementes und Anlegen von zur Verformung des Rohrs ausreichendem Innendruck an das Rohr, ggf. unter Materialnachführung in Richtung der Rohrachse während der Aufbringung des zur Verformung des Rohrmaterials ausreichenden Drucks im Inneren des Rohrs und Aufbringung von Kräften in Richtung der Rohrachse, auf.

Dieses Verfahren ermöglicht gleichzeitig mit der Befestigung der Konstruktionselemente auch die Ausformung von Nebenformelementen, wie Sechskant oder Ringen, am Rohr.

Dabei kann das Rohr ein metallischer oder nichtmetallischer Werkstoff, ggf. ein Laminatwerkstof oder ein faserverstärkter Werkstoff aus verschiedenen Materialien sein.

Die Konstruktionselemente können bspw. im wesentlichen aus Metall, Hartguß, Schalenhartguß, Sinterstahl, Stahl (z.B. Feinstanzteil oder Profilstahl, Aluminium, Titan, oder auch Nichtmetall, Keramik, Kunststoff oder aus Verbundwerkstoff sein.

Falls der/die Stützkörper aus einem Material mit einem höheren Wärmeausdehnungskoeffizienten als dem des Kon struktionselementes sind, tritt beim Betrieb der Welle durch die Erwärmung eine verbesserte Festigkeit des Verbunds Rohr/Konstruktionselement auf.

Bei einer besonders bevorzugten Ausführungsform der Erfindung, bei der die/das Konstruktionselement/e im wesentlichen gleichbleibende Wandstärke aufweist/en, können erstmals auf verlangte Festigkeit gehärtete Konstruktionselemente eingesetzt werden, die eine hohe Federung und eine dadurch bedingte verbesserte Befestigung liefern.

Durch die Erfindung können nun auch leichtere gebaute Hohlwellen, als bisher möglich, bei besserer Befestigung der Konstruktionselemente am Rohr, erzielt werden.

Weitere Merkmale und Vorteile der Erfindung ergeben sich aus den Ansprüchen sowie aus der nachfolgenden Beschreibung, in der einige Ausführungsformen unter Bezugnahme auf die begleitende Zeichnung zum besseren Verständnis der Erfindung erläutert sind. Dabei zeigt:

Fig. 1: eine schematische Darstellung einer bevorzugten Ausführungsform einer erfindunggemäßen Nockenwelle im Längsschnitt;

Fig. 2: einen Querschnitt durch einen Nocken der Welle der Fig. 1 entlang der Linie B-B';

Fig. 3: eine perspektivische Darstellung einer erfindungsgemäßen Nockenwelle.

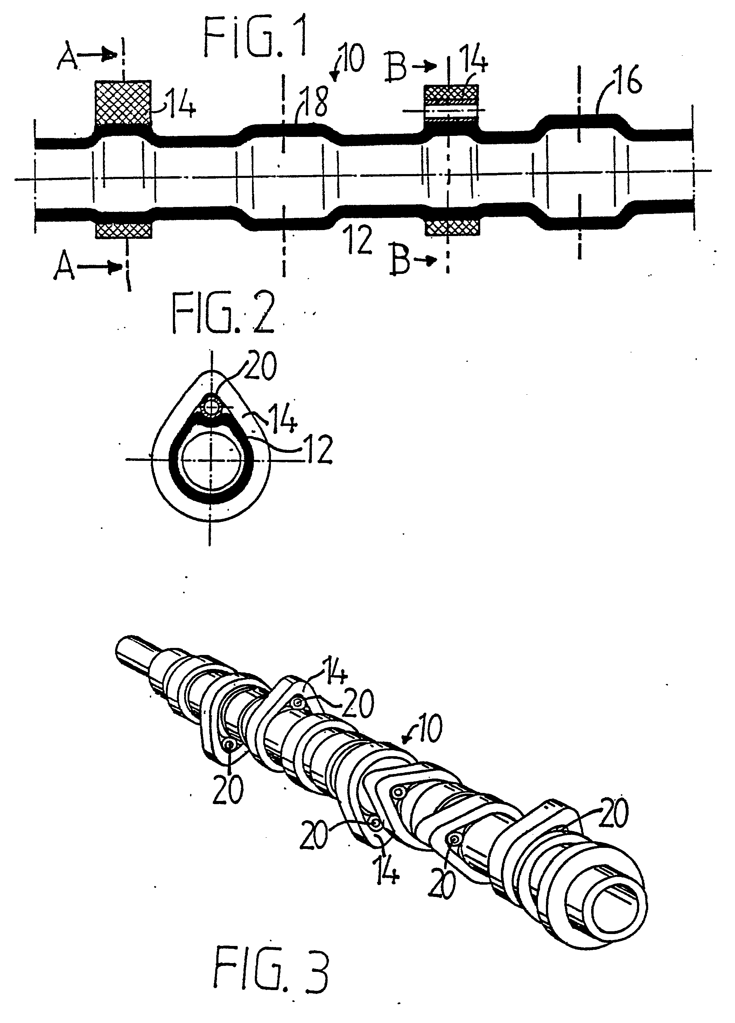

Wie in Fig. 1 gezeigt, weist eine erfindungsgemäße Hohlwelle 10 verschiedene Konstruktionselemente 14 auf. Hier ist durch Aufweiten des Rohrs 12, unter einem Nocken 14 gegen die Rohrinnenwandung der ovalen Nockenbohrung und einen Stützkörper 20, hier ein Rohrstück, das Konstruktionselement 14 mit dem Rohr 12 fest über Kraft- und Formschluß verbunden.

In Fig. 2 ist die Ausführungsform der Fig. I, entlang der Linie B-B geschnitten dargestellt, bei der der getrennt vom Nocken ausgebildete Stützkörper 20 ein Rohr ist. Die Verformung des Rohrs 12 unter dem Konstruktionselement führt dabei zu einer Ausbauchung mit einer entsprechend dem Stützkörperprofil ausgeformten Vertiefung.

In Fig. 3 ist eine erfindungsgemäße Nockenwelle in perspektivischer Darstellung gezeigt.

**Patentansprüche**

1. Hohlwelle mit Drehmoment übertragenden Konstruktionselementen, wie Zahnrädern, Kurven, Nocken od. dgl,, von denen wenigstens ein Konstruktionselement eine unrunde Öffnung zum Aufsetzen auf ein Ausgangsrohr mit im wesentlichen gleicher Wandstärke aufweist und mit jeweils wenigstens einem Stützkörper zwischen dem Ausgangsrohr und jedem Konstruktionselement mit unrunder Öffnung, wobei das Ausgangsrohr zur kraft- und formschlüssigen Verbindung mit den Konstruktionselementen durch Innendruck derart aufgeweitet ist, daß das Ausgangsrohr mit einem Teilbereich seines Umfangs an der Innenwand der Konstruktionselemente mit mindestens bei einem anderern Teilbereich seines Umfangs an der Außenwand der Stützkörper anliegt, dadurch gekennzeichnet, daß jeder Stützkörper (20) als separates Bauteil ausgebildet ist.

2. Hohlwelle nach Anspruch 1, dadurch gekennzeichnet, daß die Konstruktionselemente (14) mit unrunder Öffnung gleichmäßige Wandstärke aufweisen.

3. Hohlwelle nach Anspruch 2, dadurch gekennzeichnet, daß die Hohlwelle (10) durch partielle Verkleinerung der unrunden Öffnung des Konstruktionselements (14) oder partielle Vergrößerung des Rohraußendurchmessers hergestellt ist.

4. Hohlwelle nach einem der vorangehenden Ansprüche, dadurch gekennzeichnet, daß die Wandstärke des Ausgansrohrs (12) unter dem/den Konstruktionselement/en zumindest partiell vergrößert ist.

5. Hohlwelle nach einem der vorangehenden Ansprüche, dadurch gekennzeichnet, daß das Ausgangsrohr (12) ein metallischer oder nichtmetallischer Werkstoff, ggf. ein Laminatwerkstoff oder ein faserverstärkter Werkstoff aus verschiedenen Materialien ist.

6. Hohlwelle nach einem der vorangehenden Ansprüche, dadurch gekennzeichnet, daß die Stützkörper (20) Profilstücke, Rohrabschnitte oder Spannhülsen sind.

7. Hohlwelle nach einem der vorangehenden Ansprüche, dadurch gekennzeichnet, daß die unrunde Öffnung der Konstruktionselemente (14) oval oder polygonförmig ist.

8. Hohlwelle nach einem der vorangehenden Ansprüche, dadurch gekennzeichnet, daß die Stützkörper (20) aus einem Material mit höherem Wärmeausdehnungskoeffizienten als das Material der Konstruktionselemente (14) sind.

**Revendications**

1. Arbre creux avec éléments de construction transmettant un moment de rotation tels que engrenages, courbes, cames ou analogues, dont au moins un élément de construction présente un orifice non circulaire en vue du placement sur un tube de base ayant essentiellement une épaisseur de paroi égale et avec un élément de support au moins entre le tube de base et chaque élément de construction à orifice non circulaire, tandis que le tube de base est élargi par pression intérieure afin d'assurer un assemblage mécanique et géométrique avec les éléments de construction de façon à ce que le tube de base appuie, par une zone partielle de sa périphérie, contre la paroi intérieure des éléments de construction et par au moins une autre partie de sa périphérie contre la paroi extérieure des éléments de support, caractérisé en ce que chaque élément de support (20) est constitué par une pièce séparée.

2. Arbre creux selon la revendication 1, caractérisé en ce que les éléments de construction (14) à orifice non circulaire présentent une épaisseur de paroi uniforme.

3. Arbre creux selon la revendication 2, caractérisé en ce que l'arbre creux (10) est réalisé avec rétrécissement partiel de l'orifice non circulaire de l'élément de construction (14) ou par augmentation partielle du diamètre extérieur du tube.

4. Arbre creux selon l'une des revendications précédentes, caractérisé en ce que l'épaisseur de paroi du tube de base (12) est augmentée au moins partiellement en dessous du ou des élément(s) de construction.

5. Arbre creux selon l'une des revendications précédentes, caractérisé en ce que le tube de base (12) est un matériau métallique ou non métallique et, éventuellement, un matériau stratifié ou encore un matériau renforcé par fibres constitué de différents matériaux.

6. Arbre creux selon l'une des revendications précédentes, caractérisé en ce que les éléments de support (20) sont des éléments de profilés, des sections de tubes ou des douilles de serrage.

7. Arbre creux selon l'une des revendications précédentes, caractérisé en ce que l'orifice non circulaire des éléments de construction (14) est ovale ou polygonal.

8. Arbre creux selon l'une des revendications précédentes, caractérisé en ce que les éléments de support (20) sont réalisés en un matériau ayant un coefficient de dilatation thermique supérieur à celui du matériau des éléments de construction.

**Claims**

1. Tubular shaft with torque-transmitting construction elements, such as toothed wheels, curves, cams and the like, of which at least one construction element has a non-circular opening for pushing onto an output tube of substantially equal wall thickness, and with each at least one supporting body between the output tube and each construction element with non-circular opening, whereby the output tube is widened, for the purpose of power- and seal-tight connection with the construction elements, by way of inside pressure in such a manner that the output tube abuts with a sectional area of its periphery against the inside wall of the construction elements and with at least one other sectional area of its periphery against the outside wall of the supporting body, characterised in that each supporting body (20) is constructed as a separate component.

2. Tubular shaft according to claim 1, characterized in that the construction elements (14) with non-circular opening have an even wall thickness.

3. Tubular shaft according to claim 2, characterised in that the tubular shaft (10) is manufactured by way of partial reduction of the non-circular opening of the construction element (14) or by partial enlargement of the tube's outside diameter.

4. Tubular shaft according to one of the above claims, characterised in that the wall thickness of the output tube (12) under the construction element(s) is at least partially enlarged.

5. Tubular shaft according to one of the above claims, characterised in that the output tube (13) is made of a metallic or non-metallic material, if appropriate a laminate or a fibre-reinforced material of different substances.

6. Tubular shaft according to one of the above claims, characterised in that the supporting bodies (20) are shaped member, tube sections or tension sleeves.

7. Tubular shaft according to one of the above claims, characterised in that the non-circular opening of the construction elements (14) is oval or polygonally shaped.

8. Tubular shaft according to one of the above claims, characterised in that the supporting bodies (20) are of a material with higher heat-expansion coefficient than the materials of the construction elements (14).

FIG.1

FIG.2

FIG.3